(19) Europäisches Patentamt
European Patent Office
Office européen des brevets

(11) EP 0 892 397 A2

(12) **EUROPEAN PATENT APPLICATION**

(43) Date of publication:
**20.01.1999 Bulletin 1999/03**

(51) Int. Cl.[6]: **G11B 7/24**

(21) Application number: **98113101.4**

(22) Date of filing: **14.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.07.1997 JP 203820/97**

(71) Applicant:
**FUJI PHOTO FILM CO., LTD.**
**Kanagawa-ken (JP)**

(72) Inventor: **Kawai, Hiroshi**
**Odawara-shi, Kanagawa (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Optical information recording medium**

(57) An optical information recording medium is composed of a transparent disc substrate having a pregroove area on its surface, a recording dye layer on which information can be recorded by irradiation with light, and a light-reflecting layer overlaid in order. The recording dye layer is composed of a cyanine dye whose solubility in 2,2,3,3-tetrafluoropropanol is more than 13 wt.% at 25°C, and has a difference of optical density of less than 0.2, said difference being between an optical density measured in a position of 1 mm from an internal boundary of the pregroove area and an optical density measured in a position of one thirds of the width of the pregroove area from the internal boundary of the pregroove area.

FIGURE

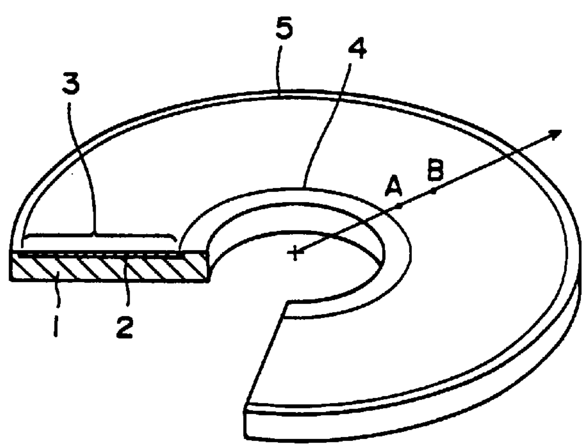


EP 0 892 397 A2

**Description**

FIELD OF THE INVENTION

This invention relates to an optical information recording medium of heat mode type on which information can be recorded by means of a laser beam and reproduced by means of a laser beam.

BACKGROUND OF THE INVENTION

An information recording medium on which information can be only once recorded by means of a laser beam is known as a recordable compact disc (CD-R), and has been getting widely used because it can be produced on a relatively small production scale and at low cost, as compared with a conventional compact disc (CD).

The optical disc of CD-R type generally has a multi-layer structure typically comprising a disc-shaped transparent substrate (support), a recording layer comprising an organic dye, a light-reflecting layer comprising a metal such as gold, and a protective layer made of resin overlaid in order. The information can be recorded by irradiating the disc with a laser beam of near infra-red region (usually 780 nm). By the application of the laser beam, irradiated area of the recording layer is locally heated to change its physical or chemical characteristics, and pits are formed in the recording layer. Since the optical characteristics of the formed pits are different from those of the area having been not irradiated, the information is optically recorded. The recorded information can be read by a reproducing procedure comprising the steps of irradiating the recording layer with a laser beam of the same wavelength as that employed in the recording procedure, and detecting the light-reflection difference between the pits and the area having no pit.

The recording dye layer is generally formed by the steps of dissolving a dye compound in a solvent to prepare a coating liquid, and then applying the coating liquid onto the disc substrate by a spin-coating method. In order to ensure good characteristics for tracking and recording/reproducing, the thus formed recording dye layer is required to have a thin and uniform thickness (preferred is about 1/8 of the wavelength of the laser beam employed for recording) in the recording area between the internal boundary and the external boundary (i.e., peripheral). In the area, the area near the internal boundary is particularly important because the area near the internal boundary of the recording dye layer is used as a read-in area and an area for trial writing, and hence the tracking characteristics at the inner part are monitored for quality control of CD-R. Therefore, it is important to keep good tracking characteristics in the area near the internal boundary of the recording layer.

As a dye compound of the recording layer, a cyanine dye having a benzoindolenine structure (in which a benzene ring is condensed with a indolenine skeleton) is advantageously used as described in Japanese Patent Provisional Publications No. 64-40382, No. 64-40387 and No. H4-175188. According to Japanese Patent Provisional Publication No. H4-175188, it is preferred to use a coating liquid containing 0.1 to 5 wt.% dye in a solvent for forming the recording dye layer. In practice, the coating liquid having a concentration of about 2.0 wt.% is generally used in consideration of the characteristics of the recording dye layer and the coating workability in the spin-coat procedure.

The present inventor has noted the solubility of a cyanine dye, and studied its effect on the characteristics of CD-R produced with the cyanine dye to find the following facts.

According to optical density measurement, the recording dye layer (which is formed from a coating liquid having a concentration of about 2.0 wt.% by the spin-coat method) appears to have a thickness uniform in the recording area. However, the tracking characteristics are not always uniform in the above recording dye layer. The reason of this fact is understood as follows. Since the solubility of the known cyanine dye is relatively small (about 8 wt.% at the highest), the dye is liable to crystallize in the coating and drying procedures, and the coating liquid is liable to stagnate in the pregroove in the area near the internal boundary. Consequently, the recording layer thus formed has non-uniform thickness, and the tracking characteristics at the inner part are inferior to those at the outer part. Japanese Patent Publication No. H7-96333 discloses an improved coating liquid for preparing a recording dye layer of optical information recording medium. The disclosed coating liquid employs a fluoroalcohol solvent (which is said to have a relatively high solubility), but the optical characteristics of the resultant optical disc is still not enough.

In practice, the coating conditions in the spin-coat method can be adjusted so that the thickness of the recording dye layer at the inner part may be made thin so as to improve the tracking characteristics at the inner part. However, if a small amount of the coating liquid is applied onto the inner part so as to form a thin recording layer on the pregroove in the inner part, the resultant layer is made also thin at the edge area of the pregroove. Therefore, it is confirmed that thus formed recording dye layer not always gives satisfying recording/reproducing characteristics.

Japanese Patent Provisional Publications No. 60-92893 and No. 61-144392, and Japanese Patent Publications No. H7-37181 and No. H7-29494 disclose certain dyes having a specific nucleus so as to increase its solubility. The proposed dyes, however, can not always give satisfying recording characteristics nor good tracking characteristics, as compared with generally used cyanine dyes. Japanese Patent Publications No. H5-5676 discloses a compound (binder) improving the solubility of dyes, but the compound is liable to lower the recording characteristics.

Accordingly, it is an object of the present invention to provide an optical information recording medium which has both good tracking characteristics and excellent recording/reproducing ones and which can be easily prepared.

SUMMARY OF THE INVENTION

The present inventor has found that a CD-R having much improved characteristics can be easily prepared using a cyanine dye having a high solubility (saturation solubility). Since the cyanine dye of a high solubility is hardly crystallized and locally deposited in the coating procedure, a thin uniform recording dye layer can be easily formed by the spin-coat method without specifically adjusting the coating conditions. Accordingly, an optical information recording medium having both good tracking characteristics and excellent recording/reproducing ones can be easily prepared. Further, if the new cyanine dye described below is used, a thin homogeneous recording dye layer can be formed with a relatively small amount of a solvent without lowering the coating workability, as compared with known dyes.

The present invention resides in an optical information recording medium of heat mode type which comprises a transparent disc substrate having a pregroove area on its surface, a recording dye layer on which information can be recorded by irradiation with light, and a light-reflecting layer overlaid in order, wherein the recording dye layer comprises a cyanine dye whose solubility in 2,2,3,3-tetrafluoropropanol is more than 13 wt.% at 25°C, and has a difference of optical density of less than 0.2, said difference being between an optical density measured in a position of 1 mm from an internal boundary of the pregroove area and an optical density measured in a position of one thirds (i.e., 1/3) of the width of the pregroove area from the internal boundary of the pregroove area.

The values of optical density described in the present specification are those measured at the wavelength of the laser beam employed for recording.

The preferred embodiments of the invention are as follows.

(1) The solubility of the cyanine dye in 2,2,3,3-tetrafluoropropanol is more than 15 wt.% (more preferably in the range of 17 to 30 wt.%) at 25°C.
(2) The difference of optical density of less than 0.2, said difference being between an optical density measured in a position of 1 mm from an internal boundary of the pregroove area and an optical density measured in a position of one thirds of the width of the pregroove area from the internal boundary of the pregroove area is in the range of 0.05 to 0.15.
(3) The light-reflecting layer comprises Au (gold).
(4) The light-reflecting layer comprises Ag (silver).
(5) The cyanine dye is represented by the following formula (I):

$$[DYE^{+}]_{n}X^{n-} \qquad (I)$$

in which $DYE^+$ represents a monovalent cyanine dye cation, n represents an integer of 2 or more, and $X^{n-}$ represents an n-valent anion.
(6) The optical information recording medium wherein the cyanine dye is represented by the following formula (II):

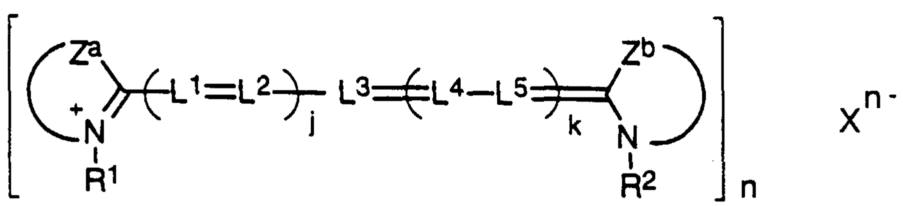

(II)

in which each of Za and Zb independently represents an atomic group required for forming a 5- or 6-membered nitrogen atom-containing heterocyclic ring; each of $R^1$ and $R^2$ independently represents an alkyl group or an aryl group; each of $L^1$, $L^2$, $L^3$, $L^4$ and $L^5$ independently represents a methine group or a methine group having a substituent group, and in the case that at least one $L^1$ trough $L^5$ has a substituent group, they may be combined via the substituent group to form a ring; j is 0, 1 or 2; k is 0 or 1; $X^{n-}$ represents an n-valent anion; and n is an integer of 2 or more.
(7) The optical information recording medium wherein the cyanine dye is represented by the following formula (IIA):

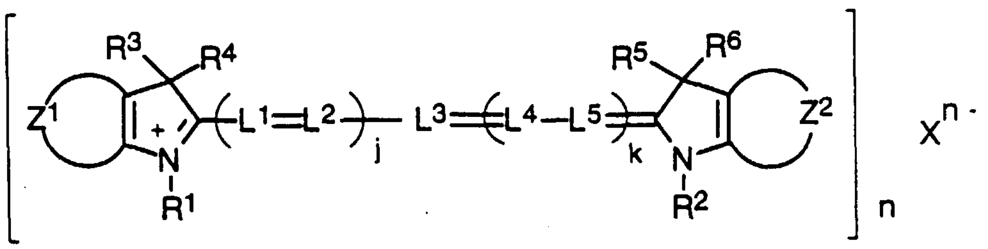

(IIA)

in which each of $Z^1$ and $Z^2$ independently represents an atomic group required for forming an indolenine nucleus or a benzoindolenine nucleus; each of $R^1$ and $R^2$ independently represents an alkyl group or an aryl group; each of $R^3$, $R^4$, $R^5$ and $R^6$ independently represents an alkyl group; each of $L^1$, $L^2$, $L^3$, $L^4$ and $L^5$ independently represents a methine group or methine group having a substituent group, and in the case that at least one of $L^1$ through $L^5$ has a substituent group, they may be combined via the substituent group to form a ring; j is 0, 1 or 2; k is an integer of 0 or 1; $X^{n-}$ represents an n-valent anion; and n is an integer of 2 or more.

(8) The optical information recording medium of heat mode type is prepared by a process comprising the steps of

> coating a transparent disc substrate (having a pregroove area on its surface) with a coating liquid containing a cyanine dye at a concentration lower than that of the saturated solution at 25°C by more than 10 wt.%,
> drying the coated liquid to form a dye layer, and
> providing a light-reflecting layer on the dried dye layer.

(9) In the above process of (8), the coating liquid preferably contains a cyanine dye at a concentration lower than that of the saturated solution at 25°C by 13 to 20 wt.% (preferably 15 to 20 wt.%).

(10) In the above process of (8), the coating liquid preferably contains a cyanine dye at a concentration of 1 to 7 wt.% (preferably 1.5 to 5 wt.%).

(11) The recording dye layer further contains an anti-fading agent of the following formula (A1) or (A2):

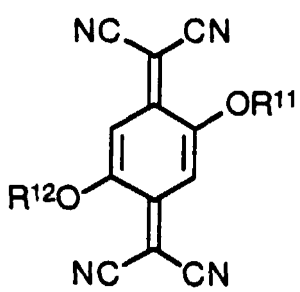

A1

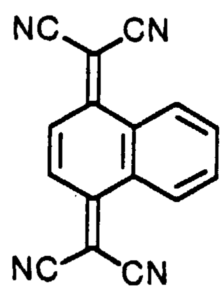

A2

in which each of $R^{11}$ and $R^{12}$ independently represents a hydrocarbon group.

## BRIEF DESCRIPTION OF THE DRAWING

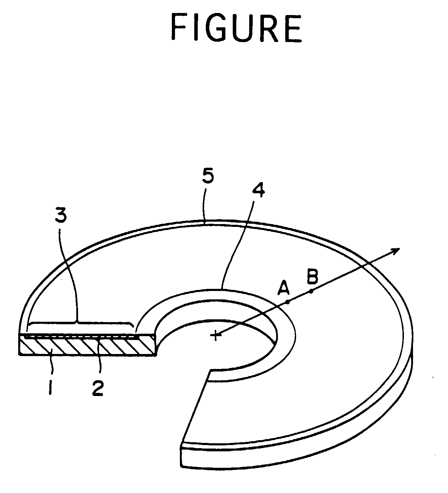

Fig.1 shows a schematic view of an optical information recording medium of the invention.

## DETAILED DESCRIPTION OF THE INVENTION

The optical information recording medium of the invention comprises a transparent disc substrate having a pregroove area on its surface, a recording dye layer, and a light-reflecting layer overlaid in order. The recording dye layer comprises a cyanine dye whose solubility in 2,2,3,3-tetrafluoropropanol is more than 13 wt.% (preferably more than 15 wt.%, more preferably 17 to 30 wt.%) at 25°C. The difference of optical density in the inner recording area is less than 0.2. The difference is determined between an optical density measured in a position of 1 mm from an internal boundary

of the pregroove area and an optical density measured in a position of one thirds (i.e., 1/3) of the width of the pregroove area from the internal boundary of the pregroove area. In order to make the thickness of the recording dye layer uniform, the difference between the inner part optical density (the optical density at the inner part) and the outer part optical density (the optical density at the outer part) is preferably set to be in the above level.

Fig.1 shows a schematic view of an optical information recording medium of the invention. The illustrated CD is partially sectioned, and a light-reflecting layer and a protective layer are omitted so as to make the illustration clearly understandable. In Fig.1, a transparent disc substrate 1 has a pregroove area 3 on its surface. The pregroove area 3 is defined by the internal boundary 4 and the external boundary 5, and a pregroove is spirally formed from the internal boundary 4 to the external boundary 5 in the area 3. A recording dye layer 2 is provided on the pregroove area 3. The optical density near the internal boundary is measured at the position A of 1 mm exterior in the radial direction to the internal boundary 4, and the outer part optical density is measured at the position B of 1/3 of the pregroove area width exterior to the internal boundary 4 in the radial direction.

The cyanine dye having a high solubility preferably is a compound having the following formula (I):

$$[DYE^+]_n X^{n-} \qquad (I)$$

in which $DYE^+$ represents a monovalent cyanine dye cation having no anionic substituent, $X^{n-}$ represents an n-valent anion, and n represents an integer not less than 2 (namely, $X^{n-}$ represents an anion having the valence of not less than 2).

The polyvalent anion represented by $X^{n-}$ may be an inorganic anion or an organic anion. Examples of the polyvalent inorganic anions include sulfate ion, phosphate ion, hydrogenphosphate ion, and heteropolyacidic ion such as phosphorus wolframate ion. Examples of the polyvalent organic anions include carboxylate ions (e.g., succinate ion, maleate ion, fumarate ion, and terephthalate ion), aromatic disulfonate ions (e.g., benzene-1,3-disulfonate ion, 3,3'-biphenyldisulfonate ion, naphthalene-1,5-disulfonate ion, naphthalene-1,6-disulfonate ion, naphthalene-2,6-disulfonate ion, 1-methylnaphthalene-2,6-disulfonate ion, naphthalene-2,7-disulfonate ion, naphthalene-2,8-disulfonate ion, 2-naphthol-6,8-disulfonate ion, 1,8-dihydroxynaphthalene-3,6-disulfonate ion, 1,5-dihydroxynaphthalene-2,6-disulfonate ion), aromatic trisulfonate ions (e.g., naphthalene-1,3,5-trisulfonate ion, naphthalene-1,3,6-trisulfonate ion, naphthalene-1,3,7-trisulfonate ion, 1-naphthol-3,6,8-trisulfonate ion, and 2-naphthol-3,6,8-trisulfonate ion), aromatic tetrasulfonate ions (e.g., naphthalene-1,3,5,7-tetrasulfonate ion), aliphatic polysulfonate ions (e.g., butane-1,4-disulfonate ion, and cyclohexane-1,4-disulfonate ion), and polysulfuric monoesters (e.g., propylene glycol-1,2-disulfate, and polyvinyl alcohol polysulfate ester ions). In the above formula, $X^{n-}$ preferably is an anion having 2 to 4 valence, more preferably an anion having 2 or 3 valence, and further preferably a divalent anion.

The cyanine dye compound preferably employed for the invention has the following formula (II):

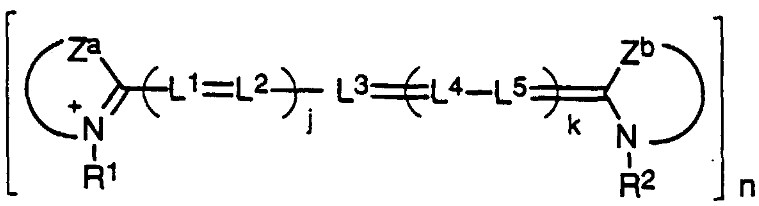

$X^{n-}$ (II)

in which each of Za and Zb independently represents an atomic group required for forming a 5- or 6-membered nitrogen atom-containing heterocyclic ring; each of $R^1$ and $R^2$ independently represents an alkyl group or an aryl group; each of $L^1$, $L^2$, $L^3$, $L^4$ and $L^5$ independently represents a methine group which may have a substituent group, and in the case that some of $L^1$ through $L^5$ have substituent groups, they may be combined via the substituent to form a ring; j is 0, 1 or 2; k is 0 or 1; $X^{n-}$ is an n-valent anion and n is an integer of not less than 2.

Examples of the 5- or 6-membered nitrogen atom-containing heterocyclic rings (nuclei) containing the atomic group of Za or Zb include thiazole nucleus, benzothiazole nucleus, naphthothiazole nucleus, thiazoline nucleus, oxazole nucleus, benzooxazole nucleus, naphthooxazole nucleus, oxazoline nucleus, selenazole nucleus, benzoselenazole nucleus, naphthoselenazole nucleus, selenazoline nucleus, tellurazole nucleus, benzotellurazole nucleus, naphthotellurazole nucleus, tellurazoline nucleus, imidazole nucleus, benzoimidazole nucleus, naphthoimidazole nucleus, pyridine nucleus, quinoline nucleus, isoquinoline nucleus, imidazo(4,5-b)quinozaline nucleus, oxadiazole nucleus, thiadiazole nucleus, tetrazole nucleus, and pyrimidine nucleus. Preferred are benzothiazole nucleus, imidazole nucleus, naphthoimidazole nucleus, quinoline nucleus, isoquinoline nucleus, imidazo(4,5-b) quinozaline nucleus, thiadiazole nucleus, tetrazole nucleus, and pyrimidine nucleus. The above rings may be condensed with a benzene ring or a naphthoquinone ring.

Each of the above 5- or 6-membered nitrogen atom-containing heterocyclic rings may have a substituent group. Examples of the substituent groups (or atoms) include a halogen atom (preferably, chlorine atom), an alkyl group (preferably, an alkyl group of straight chain having 1-6 carbon atoms) which may have one or more substituent groups, and an aryl group (preferably, phenyl group). Examples of the substituent groups include alkoxy group (e.g., methoxy group) and alkylthio group (e.g., methylthio group).

The alkyl group represented by $R^1$ or $R^2$ preferably has 1-18 (more preferably 1-8, further preferably 1-6) carbon atoms and may be of a straight chain, a cyclic chain or a branched chain. The alkyl group of $R^1$ or $R^2$ may have a substituent group.

The aryl group represented by $R^1$ or $R^2$ preferably has 6-18 carbon atoms and may have a substituent group.

Examples of preferred substituent groups for the above alkyl or aryl group include an aryl group of 6-18 carbon atoms (e.g., phenyl, chlorophenyl, anisyl, toluyl, 2,4-di-t-amyl, and 1-naphthyl) which may have one or more substituent groups, an alkenyl group (e.g., vinyl, 2-methylvinyl), an alkynyl group (e.g., ethynyl, 2-methylethynyl, and 2-phenylethynyl), halogen atom (e.g., F, Cl, Br, and I), cyano group, hydroxyl group, carboxyl group, an acyl group (e.g., acetyl, benzoyl, salicyloyl, and pivaloyl), an alkoxy group (e.g., methoxy, butoxy, and cyclohexyloxy), an aryloxy group (e.g., phenoxy, and 1-naphthoxy), an alkylthio group (e.g., methylthio, butylthio, benzylthio, and 3-methoxypropylthio), an arylthio group (e.g., phenylthio, and 4-chlorophenylthio), an alkylsulfonyl group (e.g., methanesulfonyl, and butanesulfonyl), an arylsulfonyl group (e.g., benzenesulfonyl and p-toluenesulfonyl), a carbamoyl group of 1-10 carbon atoms, an amide group of 1-10 carbon atoms, an acyloxy group of 2-10 carbon atoms, an alkoxycarbonyl group of 2-10 carbon atoms, a heterocyclic group (e. g., aromatic heterocyclic rings such as pyridyl, thienyl, furyl, thiazolyl, imidazolyl and pyrazolyl; and aliphatic heterocyclic rings such as pyrrolidine ring, piperidine ring, morpholine ring, pyran ring, thiopyran ring, dioxane ring, and dithiolan ring).

Preferably, each of $R^1$ and $R^2$ independently represents an unsubstituted straight chain alkyl group of 1-8 (preferably 1-6, more preferably 1-4) carbon atoms; or a straight chain alkyl group of 1-8 (preferably 1-6, more preferably 1-4) carbon atoms substituted with alkoxy (preferably methoxy) group or alkylthio (preferably methylthio) group.

The methine group represented by $L^1$-$L^5$ may have a suhstituent group. Examples of the substituent groups include an alkyl group of 1-18 carbon atoms, an aralkyl group, and the groups described above as substituent groups for the alkyl or aryl group of $R^1$ or $R^2$. Among them, preferable examples are an alkyl group (e.g., methyl), an aryl group (e.g., phenyl), a halogen atom (e.g., Cl, Br), and an aralkyl group (e.g., benzyl). A particularly preferred substituent group is methyl group.

It is preferred that j and k represent 2 and 0, respectively, or that each of j and k independently represent 0 or 1 in the formula (II) or (IIA).

The $L^1$-$L^5$ may be combined via one or more substituent groups to form a ring, which preferably consists of 5 or 6 membered atoms, and the ring may be condensed. The positions where the formed ring are connected depends on the length of the methine chain. If $L^1$-$L^5$ form a pentamethine chain, the positions for connecting are preferably $L^1$ and $L^3$, $L^2$ and $L^4$, or $L^3$ and $L^5$. Further, the substituent groups may form a condensed ring. When double condensed rings are formed, the positions for connecting are $L^1$ and $L^3$ and $L^5$. In that case, each set of $L^1$ and $R^1$, $L^5$ and $R^2$, and $L^3$ and $R^2$ may be combined to from a ring, which preferably consists of 5 or 6 membered atoms. The ring formed of the methine groups of $L^1$-$L^5$ and the substituent group preferably is a cyclohexene ring.

In the formula (II), $X^{n-}$ represents an n-valent anion and n represents an integer not less than 2.

Preferably, $X^{n-}$ in the formula (II) is an aromatic disulfonate ion or an aromatic trisulfonate ion. Examples of the ions include benzene-1,3-disulfonate ion, 3,3'-biphenyldisulfonate ion, naphthalene-1,5-disulfonate ion, naphthalene-1,6-disulfonate ion, naphthalene-2,6-disulfonate ion, 1-methylnaphthalene-2,6-disulfonate ion, naphthalene-2,7-disulfonate ion, naphthalene-2,8-disulfonate ion, 2-naphthol-6,8-disulfonate ion, 1,8-dihydroxynaphthalene-3,6-disulfonate ion, and 1,5-dihydroxynaphthalene-2,6-disulfonate ion. Among the above, preferable are naphthalene-1,5-disulfonate ion, naphthalene-1,6-disulfonate ion, naphthalene-2,6-disulfonate ion, 1-methylnaphthalene-2,6-disulfonate ion, naphthalene-2,7-disulfonate ion, and naphthalene-2,8-disulfonate ion. A particularly preferred is naphthalene-1,5-disulfonate ion.

The cyanine dye compound preferably employable for the invention has the following formula (IIA):

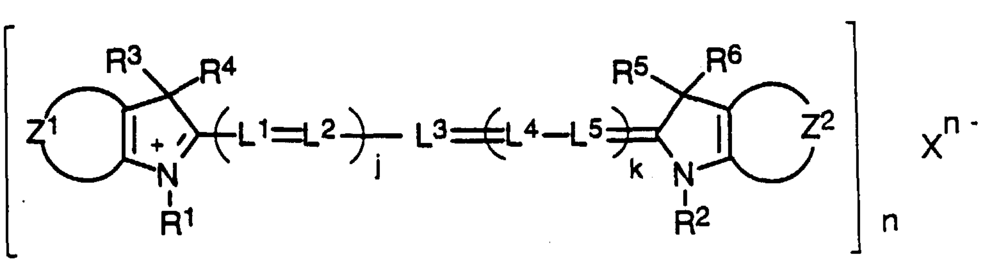

(IIA)

in which each of $Z^1$ and $Z^2$ independently represents an atomic group required for forming an indolenine nucleus or a benzoindolenine nucleus; each of $R^1$ and $R^2$ independently represents an alkyl group or an aryl group; each of $R^3$, $R^4$, $R^5$ and $R^6$ independently is an alkyl group; each of $L^1$, $L^2$, $L^3$, $L^4$ and $L^5$ independently is a methine group which may have one or more substituent groups, and in the case that some of $L^1$-$L^5$ have one or more substituent groups, they may be combined via the substituent group(s) to form a ring; j is 0, 1 or 2; k is 0 or 1; $X^{n-}$ is an n-valent anion and n is an integer of not less than 2.

The indolenine or benzoindolenine nucleus containing the atomic group of $Z^1$ or $Z^2$ may have one or more substituent groups. Examples of the substituent groups (or atoms) include a halogen atom (preferably, chlorine atom) and an aryl group (preferably, phenyl group).

The alkyl group represented by each of $R^3$, $R^4$, $R^5$ and $R^6$ preferably has 1-18 carbon atoms and may be a straight chain, a cyclic chain or a branched chain. Each set of $R^3$ and $R^4$, and $R^5$ and $R^6$ may be combined to form a ring. The alkyl group of $R^3$, $R^4$, $R^5$ or $R^6$ may have a substituent group. Preferable examples of the substituent group are the same as those described above for the alkyl or aryl group of $R^1$ or $R^2$. Preferably, each of $R^3$, $R^4$, $R^5$ and $R^6$ independently represents an unsubstituted straight chain alkyl group of 1-6 carbon atoms (methyl and ethyl are particularly preferred).

Each of $R^1$, $R^2$, $L^1$, $L^2$, $L^3$, $L^4$, $L^5$, j, k, $X^{n-}$ and n in the formula (IIA) has the same meaning as described above for the formula (II), and the preferred examples of each are also the same as described for the formula (II).

Preferred examples of the compound of the formula (I), which includes the formulas (II) and (IIA), are shown below.

I-1

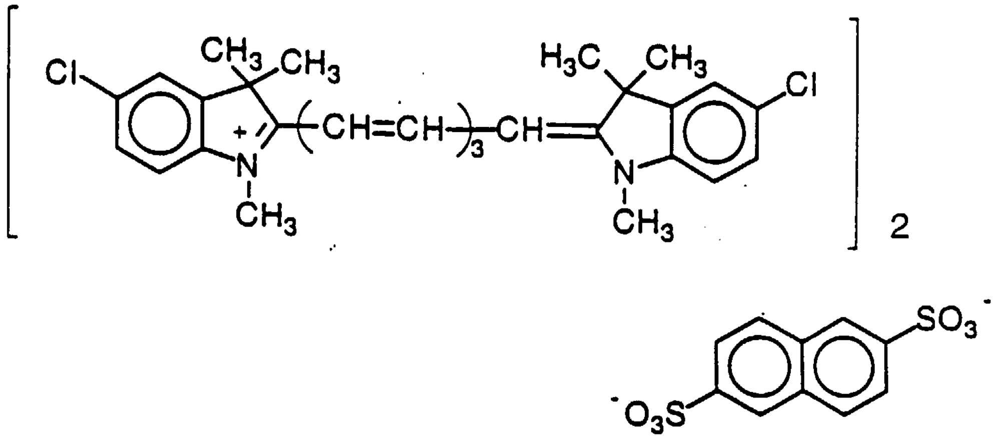

I-2

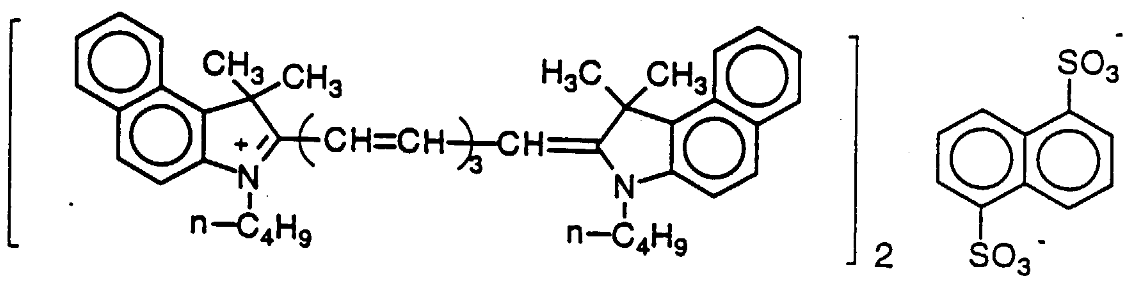

I-3

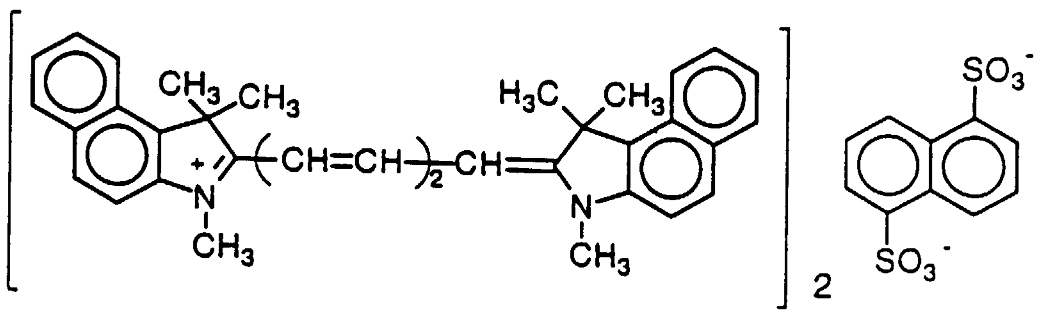

I-4

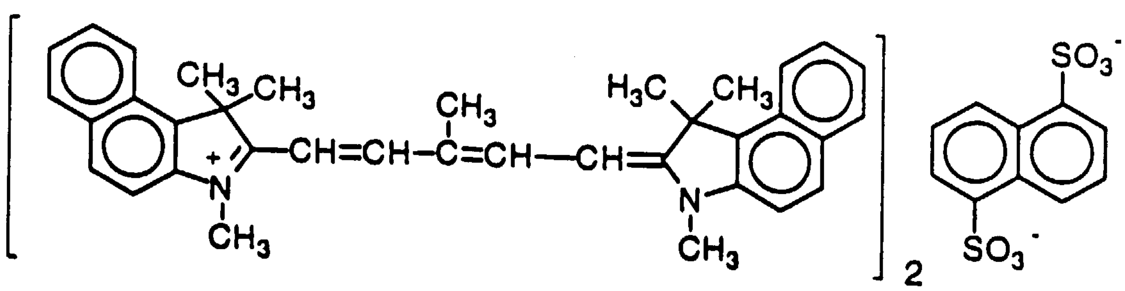

I-5

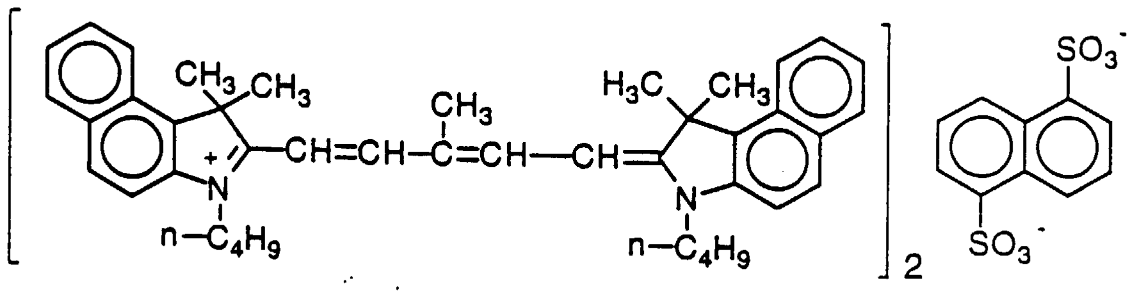

I-6

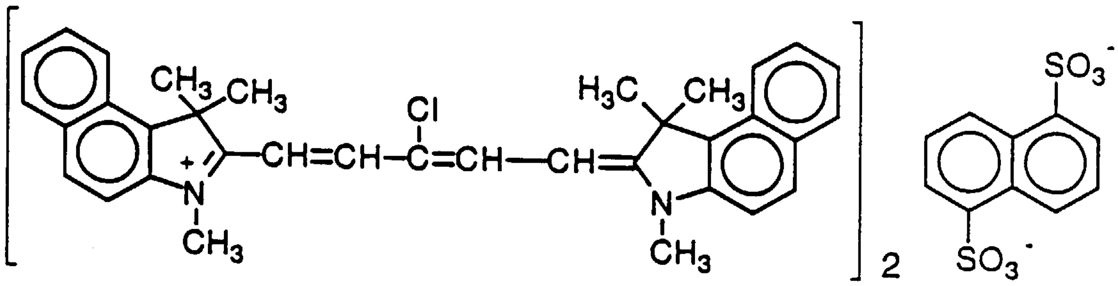

I-7

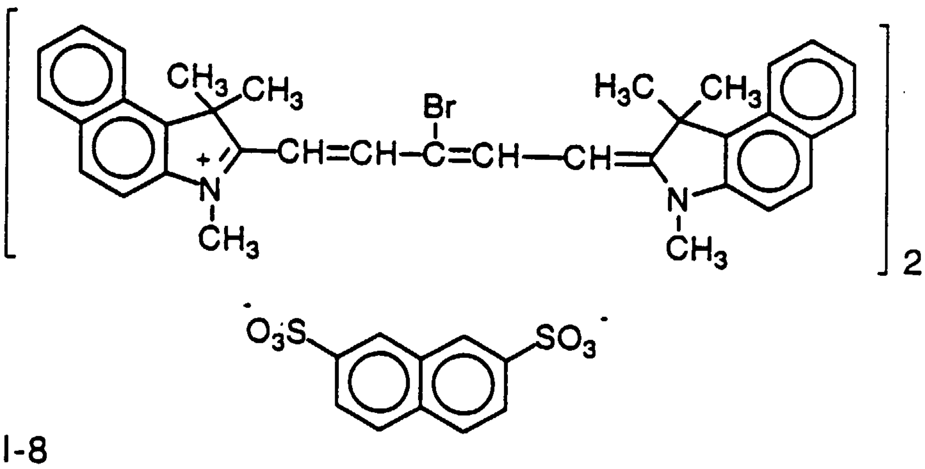

I-8

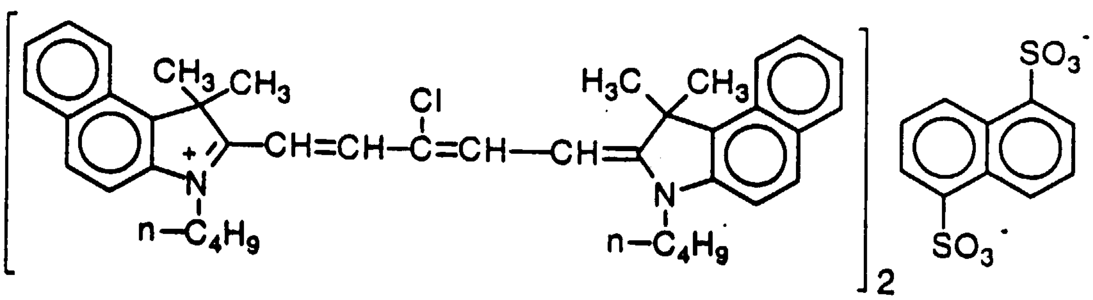

I-9

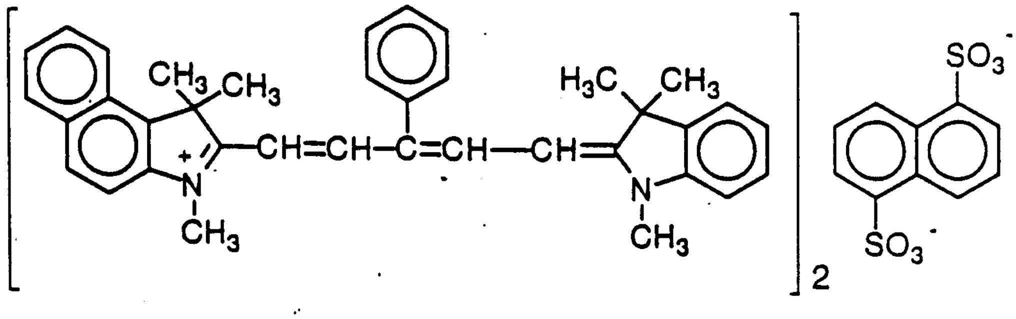

I-10

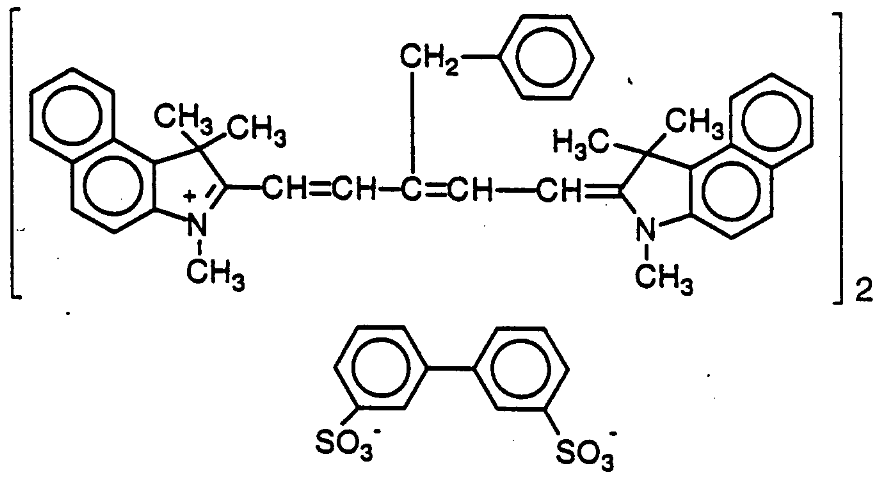

I-11

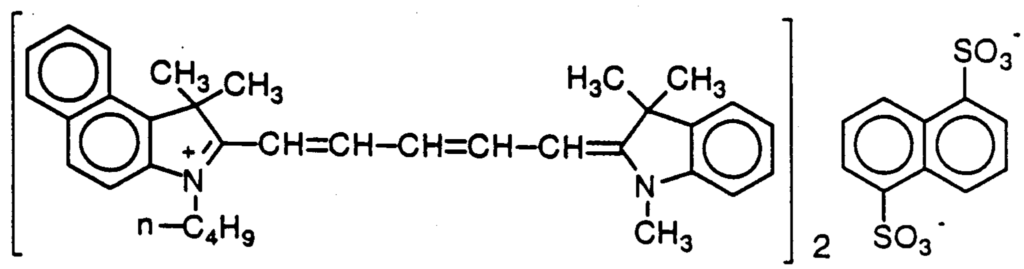

I-12

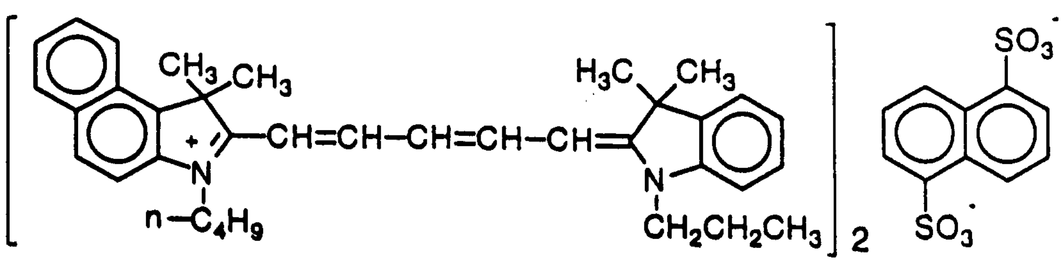

I-13

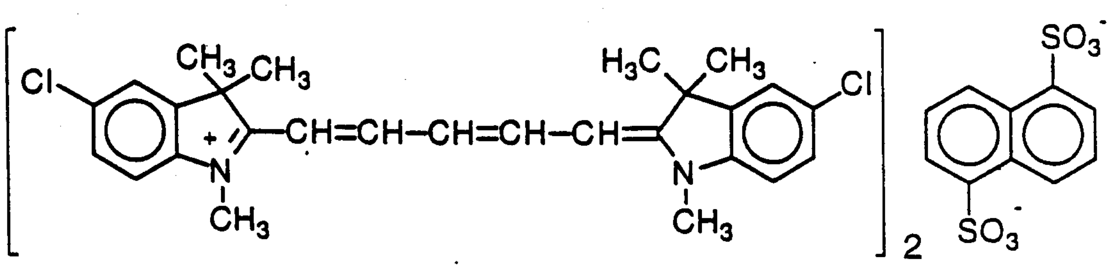

I-14

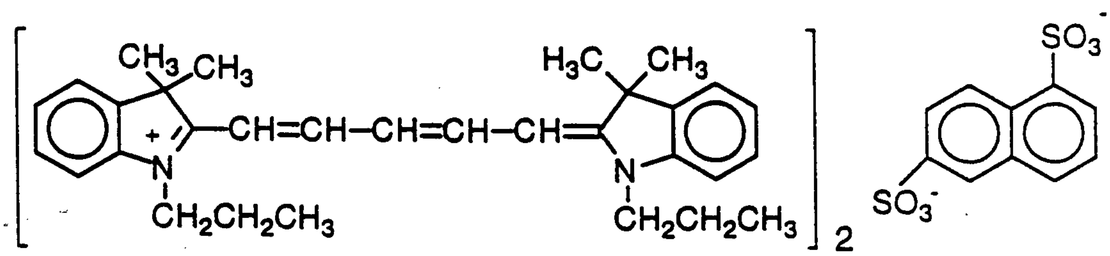

I-15

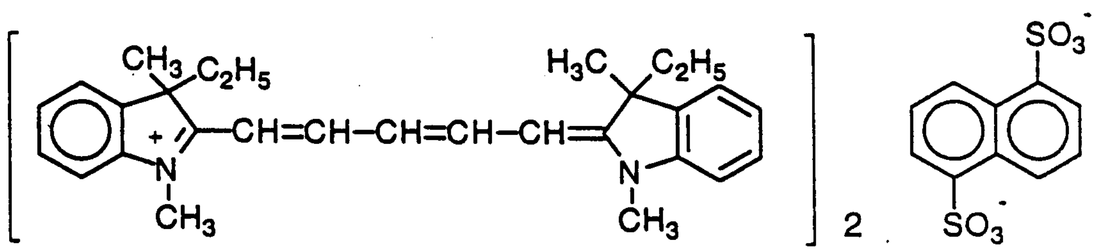

I-16

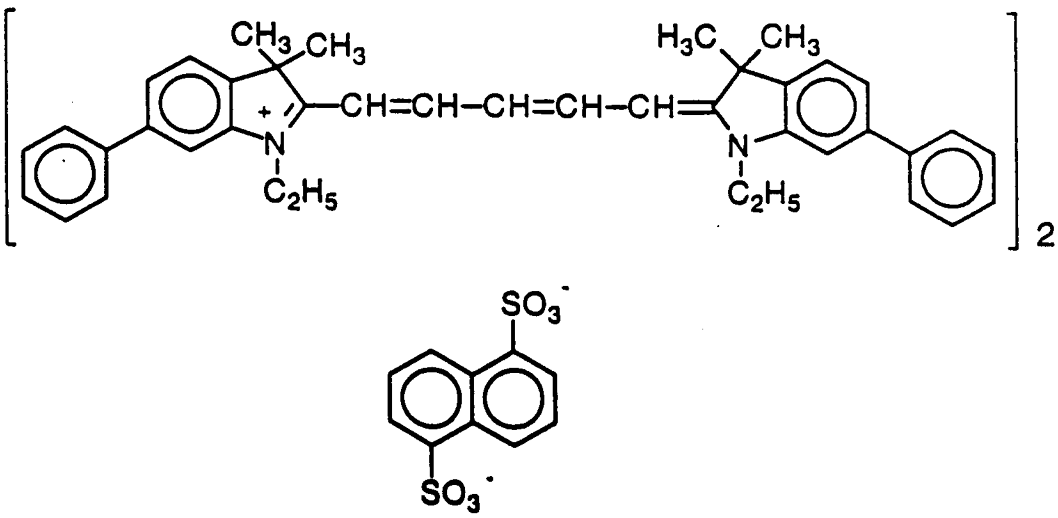

I-17

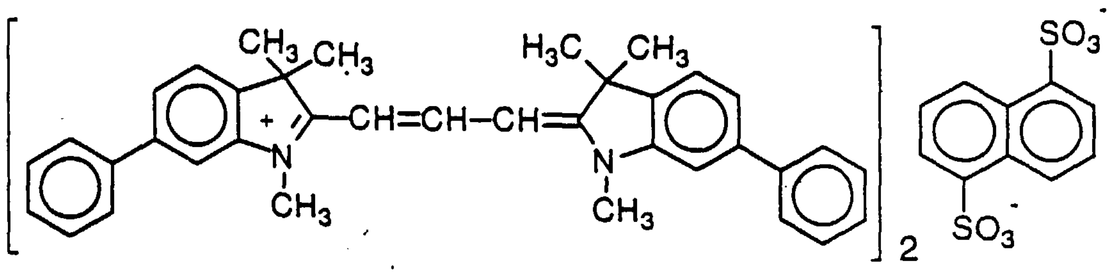

I-18

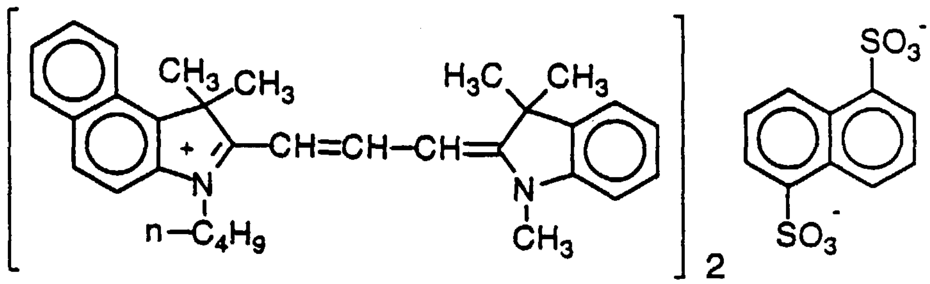

I-19

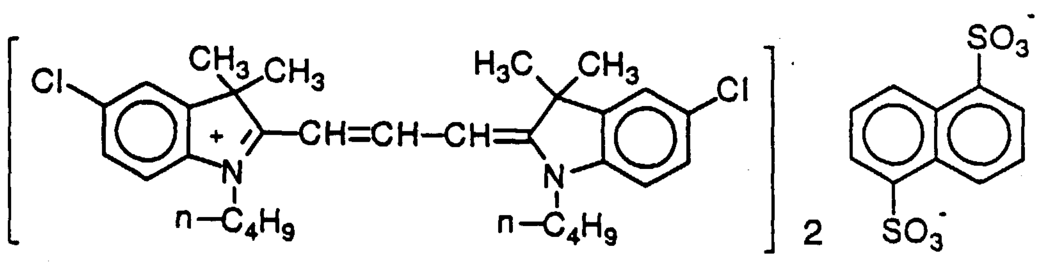

I-20

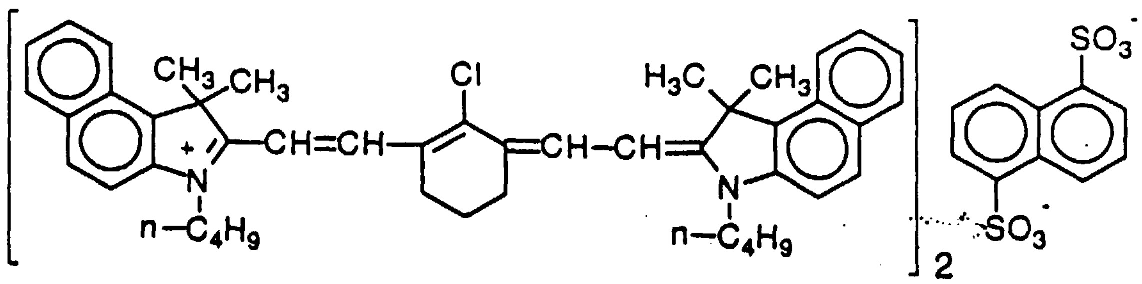

I-21

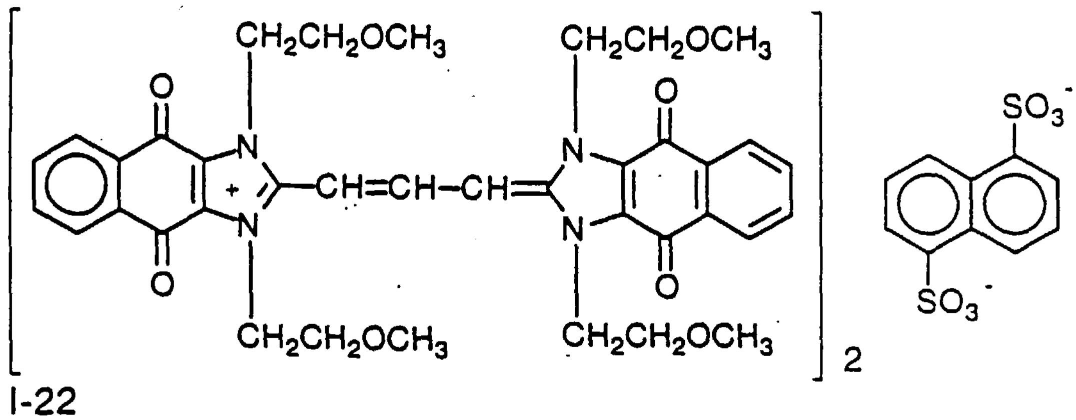

I-22

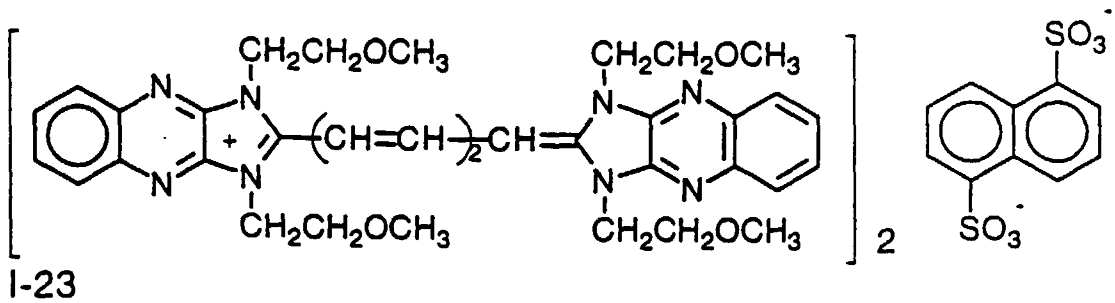

I-23

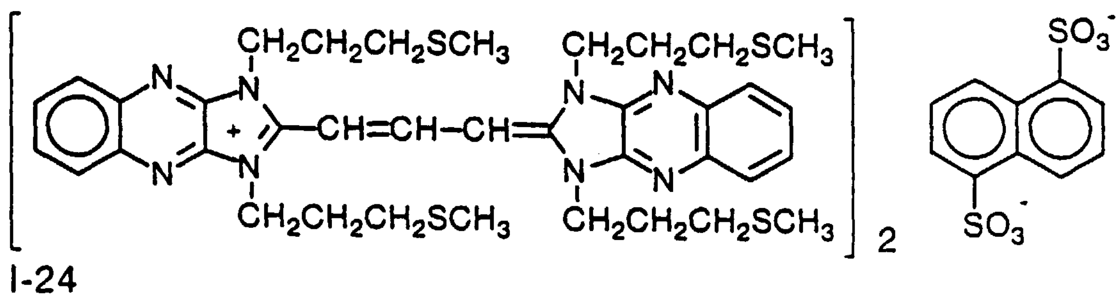

I-24

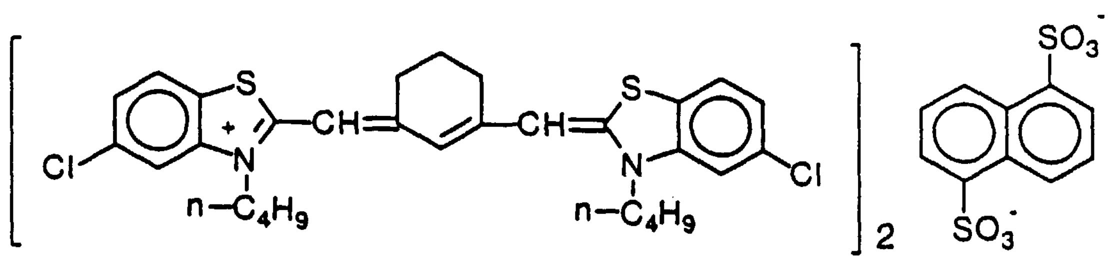

I-25

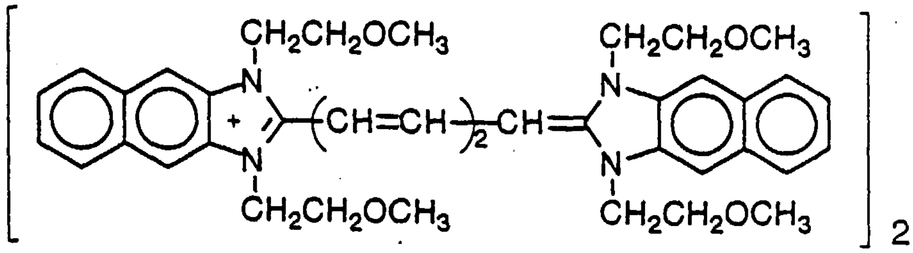
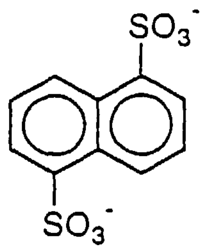

I-26

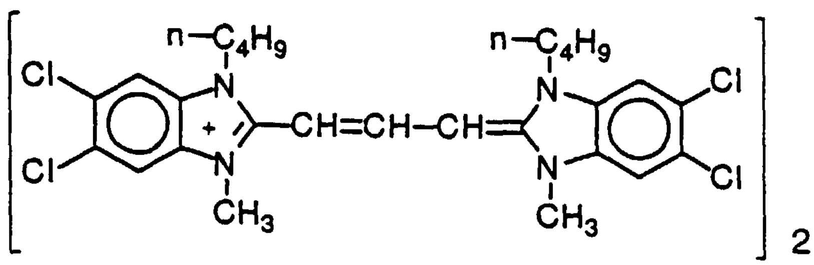
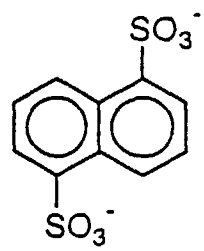

I-27

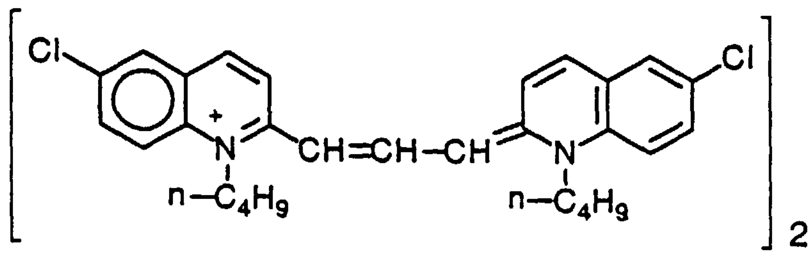

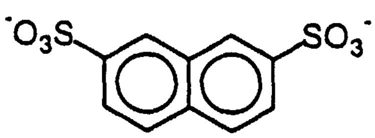

I-28

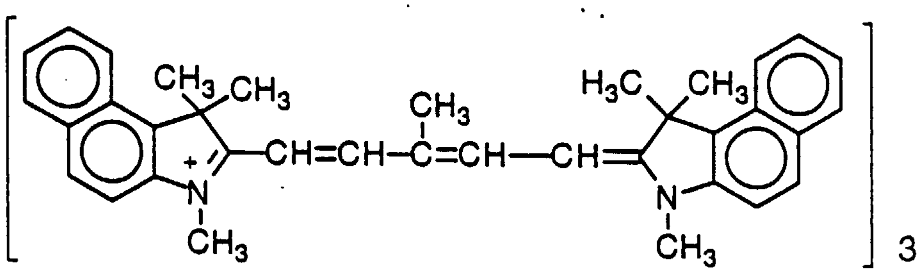

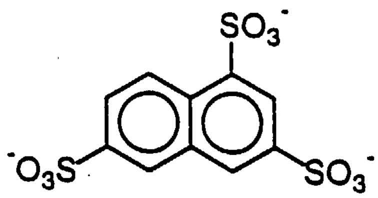

I-29

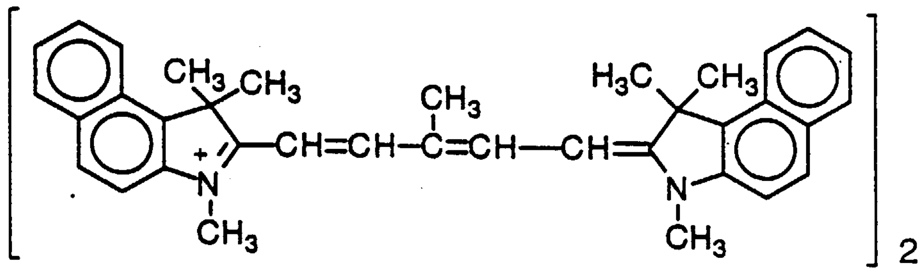

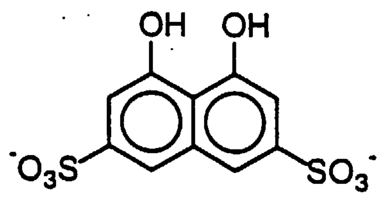

I-30

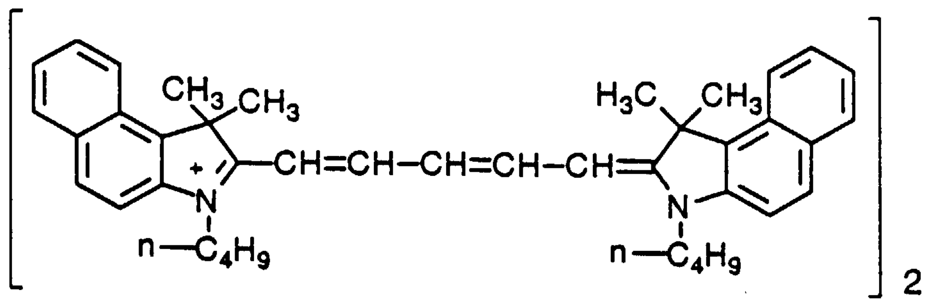

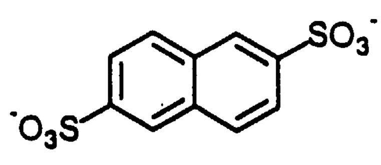

I-31

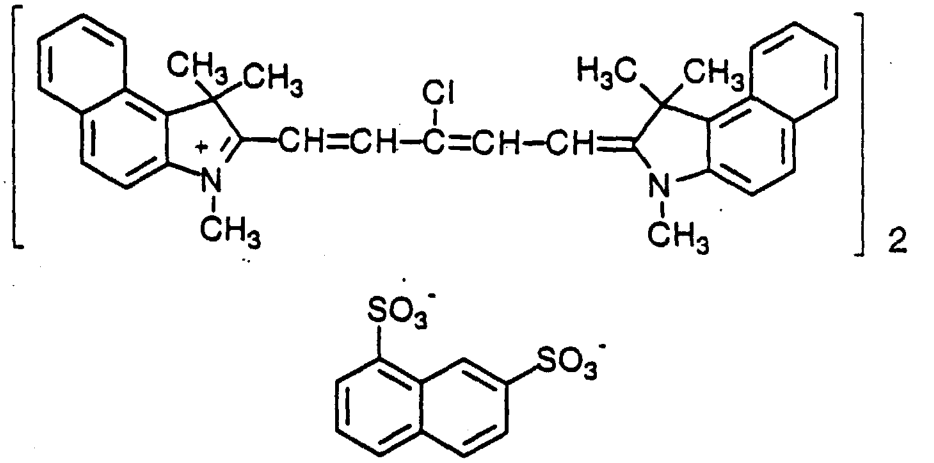

I-32

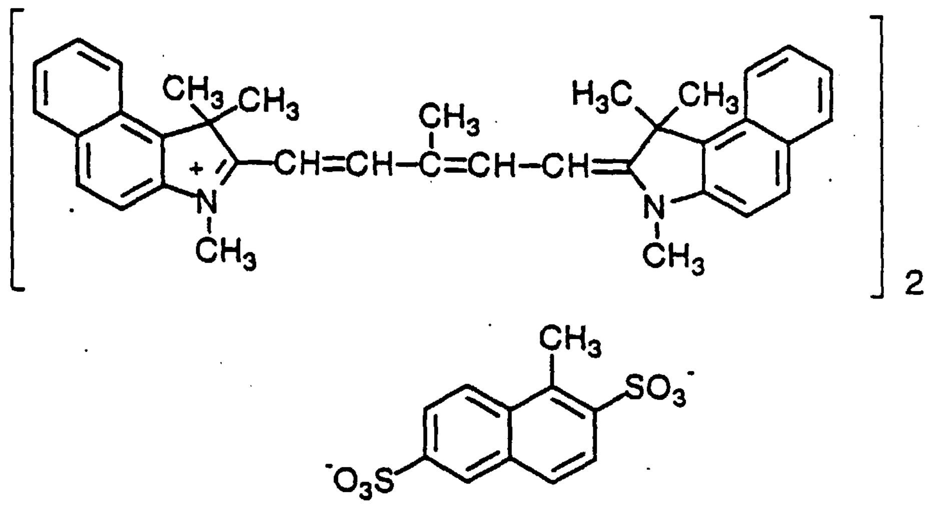

I-33

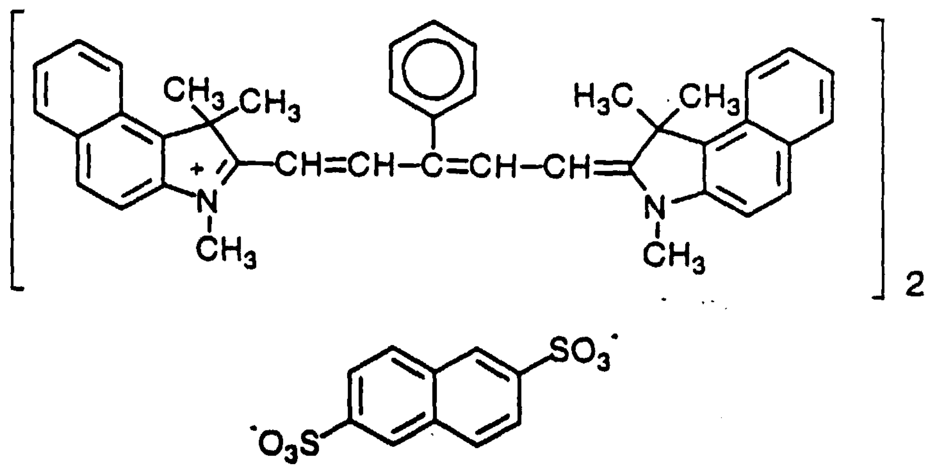

The compound of the formula (I) can be employed singly or in combination with two or more compounds.

The compound of the formula (I) can be easily prepared in the manner described in the following texts: "The Cyanine dyes and Related Compounds 5", pp. 55-, written by F. M. Hamer (Interscience Publishers, New York, London,

published in 1964); "Polymethine Dyes", pp. 23 and 38, written by Nikolai Tyutyulkov, Jurgen Fabian, Achim Ulehlhorn, Fritz Dietz and Alia Tadjer (St. Kliment Ohridski University Press, Sophia); "Heterocyclic Compounds-Special Topics in Heterocyclic Chemistry", Chapter 18, Section 14, pp. 482-515, written by D. M. Sturmer (John Wiley & Sons, New York, London, published in 1977); and "Rodd's Chemistry of Carbon Compounds, 2nd edition, part B", Chapter 15, pp. 369-422 (1977), Chapter 15, pp. 267-296 (1985) (Elsevir Science Publishing Company Inc., New York).

The polyvalent anion can be introduced into the dye as a counter ion, for example, in the following manner.

A cyanine dye having a monovalent counter ion is dissolved in an appropriate solvent. To the solution, a solution of polyvalent acid or its salt is added, and then optionally another solvent in which the dye is insoluble is added to precipitate the dye having a polyvalent counter anion. This method is very easy and suitable for synthesis on a large scale. Besides that, the polyvalent anion can be also introduced by means of ion exchange resin.

The cyanine dye of the invention can be prepared in the manner concretely described in the following synthesis example.

[Synthesis Example -- Preparation of the compound I-4]

A compound consisting of the cation part of the compound I-4 and p-toluenesulfonate anion was prepared in the known manner. 23.6 g (0.04 mol) of the prepared compound was dissolved in 400 ml of methanol, and then 7.2 g (0.02 mol) of naphthalene-1,5-disulfonic acid was added. The resulting solution was stirred at 50°C for 1 hour. After cooling, deposited precipitation was collected and washed with methanol, followed by drying at 50°C overnight (yield: 22.3 g, melting point: 238°C).

The recording dye layer of the invention preferably contains an anti-fading agent.

With respect to the compound (anti-fading agent) represented by the formula (A1) or (A2), a detailed description is given below.

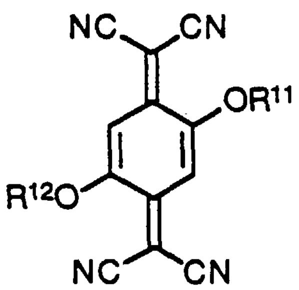

A1

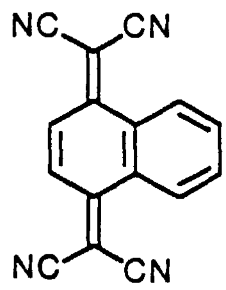

A2

In the formula (A1), each of $R^{11}$ and $R^{12}$ independently represents a hydrocarbon group. Preferably, the hydrocarbon group is an unsubstituted alkyl group having 1-18 (more preferably 1-10, further preferably 1-6) carbon atoms which may form a straight, branched or cyclic chain. An unsubstituted alkyl group having 1-10 (more preferably 1-6) carbon atoms which may form a straight or branched chain is particularly preferred. Examples of the alkyl group include methyl, ethyl, n-propyl, iso-propyl, butyl, iso-butyl, tert-butyl, pentyl, hexyl, octyl and decyl. Concrete examples of the compound represented by the formula (A1) are shown below.

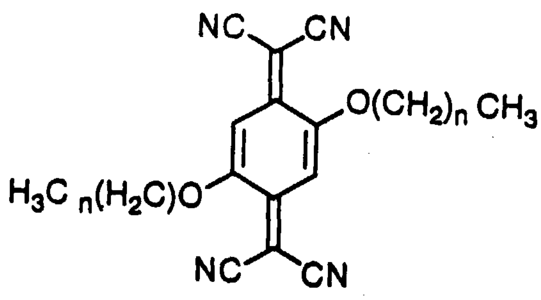

n=0~11
(A1-1~A1-12)

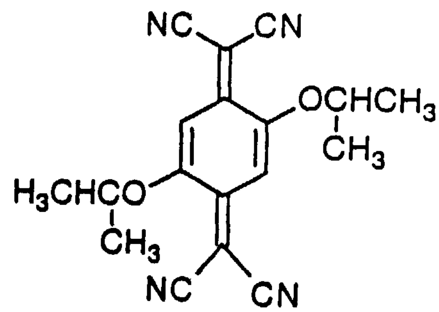

(A1-13)

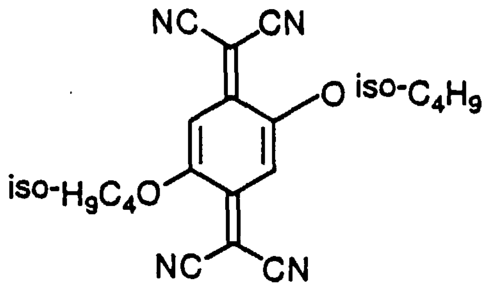

(A1-14)

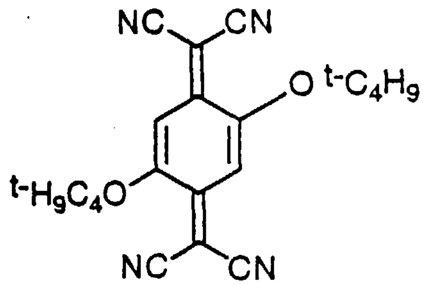

(A1-15)

The compound of the formula (A1) or (A2) can be employed singly or in combination with two or more compounds.

The optical information recording medium of the invention comprises a transparent disc substrate, a recording dye layer comprising a cyanine dye of high solubility, and a light-reflecting layer overlaid in this order. A protective layer is preferably provided on the light-reflecting layer.

The optical information recording medium of the invention can be prepared, for example, by the following method.

The transparent substrate (support) can be made of any of materials known as materials for producing a substrate of an optical information recording medium. Examples of the materials include glass, polycarbonate, acrylic resins such as polymethyl methacrylate, vinyl chloride resins such as polyvinyl chloride and vinyl chloride copolymer, epoxy resins, amorphous polyolefins, and polyesters. These materials can be employed in combination, if desired. These materials are molded to give a film or a rigid plate. Polycarbonate is most preferred from the viewpoints of anti-humidity and dimensional stability.

The substrate may have an undercoating layer on its surface of the recording layer side, so as to increase surface smoothness and adhesion and to keep the recording dye layer from deterioration. Examples of the materials for the undercoating layer include polymers such as polymethyl methacrylate, acrylate-methacrylate copolymer, styrene-maleic anhydride copolymer, polyvinyl alcohol, N-methylolacrylamide, styrene-vinyltoluene copolymer, chloro-sulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene, and polycarbonate, and surface treating agents such as a silane-coupling agent.

The undercoating layer can be formed by applying a coating solution (in which one or more of the above-mentioned materials are dissolved or dispersed) onto the surface of the substrate by the known coating methods such as spin-coat, dip-coat, and extrusion-coat. The undercoating layer generally has a thickness of 0.005 to 20 μm, preferably 0.01 to 10 μm.

On the surface of the substrate or on the undercoating layer, pregroove for tracking or giving address signals is formed. The pregroove is preferably formed directly on the surface of the substrate when the substrate is molded from polymer material by injection or extrusion.

Alternatively, the pregroove can be provided on the surface of the substrate by placing a pregroove layer. The pregroove layer can be produced from a mixture of a monomer (such as monoester, diester, triester and tetraester) of acrylic acid, or its oligomer, and a photo-polymerization reaction initiator. The pregroove layer can be produced by the steps of coating a mixture of the polymerization initiator and the monomer such as the above-mentioned acrylic ester on a precisely produced stamper, placing a substrate on the coated layer, and irradiating the coated layer with ultra-violet rays through the stamper or the substrate, so as to cure the coated layer as well as to combine the cured layer and the substrate. The substrate to which the cured coated layer is attached is separated from the stamper, to give the desired substrate equipped with the pregroove layer. The thickness of the pregroove layer generally is in the range of 0.05 to 100 μm, preferably in the range of 0.1 to 50 μm.

The pregroove formed on the substrate preferably has a depth in the range of 100 to 3,000 angstroms and a half-width of 0.2 to 0.9 μm. The depth of 1500 to 2,000 angstroms of the pregroove is preferably adopted because such pregroove can enhance the sensitivity without decreasing the light-reflection on the substrate. The optical disc having a recording layer coated on the deep pregoove and a light-reflection layer shows a high sensitivity, and hence is employable even in a recording system using a laser light of low laser power. This means that a semiconductor laser of a low output power can be employed, and the life of semiconductor laser can be prolonged.

On the substrate having the pregroove area, the recording dye layer is provided.

The recording dye layer having even thickness can be easily formed by the steps of preparing a coating liquid containing a cyanine dye at a concentration lower than that of the solubility at 25°C by more than 10 wt.%, coating the surface of the substrate with the coating liquid, and then drying the coated layer. The concentration of the coating liquid is preferably adjusted to be lower than that of the solubility by 13 to 20 wt.% (more preferably 15 to 20 wt.%) at 25°C. The coating liquid satisfying the above condition is easily prepared using a cyanine dye represented by the above formula (I), because it gives a high solubility (for example, the solubility in 2,2,3,3-tetrafluoropropanol is 20 wt.% at 25°C).

The solubility (saturation solubility ) here means a concentration of the solution in which dye crystals deposit after it was kept at 25°C (controlled with thermostat) for 12 hours in a sealed container.

The concentration of the coating liquid (coating solution) generally is in the range of 0.01 to 10 wt.% (preferably 1 to 7 wt.%, more preferably 1.5 to 5 wt.%). The recording dye layer may contain, if desired, the above-described anti-fading agents and/or binder, as well as the cyanine dye.

The compound of the formula (A1) or (A2) of anti-fading agent is employed in an amount of 0.1 to 50 wt.%, preferably 0.5 to 45 wt.%, more preferably 3 to 40 wt.%, further preferably 5 to 25 wt.%, based on that of the cyanine dye.

Examples of solvents for the coating liquid include esters such as butyl acetate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as cyclohexanone; ethers such as tetrahydrofuran, diethyl ether and dioxane; alcohols such as ethanol, n-propanol, isopropanol, n-butanol, and diacetone alcohol; fluorine-containing solvents such as 2,2,3,3-tetrafluoropropanol; and glycol ethers such as ethyleneglycol monomethyl ether, ethyleneglycol monoethyl ether, and propylene-glycol monomethyl ether. These solvents can be employed in combination, in consideration of the solubility of the used compound in the solvent. In the present invention, 2,2,3,3-tetrafluoropropanol is particularly preferred.

The coating liquid can further contain auxiliary additives such as an oxidation inhibitor, a UV absorber, a plasticizer, and a lubricant.

Examples of the binders include natural-origin polymers such as gelatin, cellulose derivatives, dextran, rosin, and rubber; hydrocarbon polymer resins such as polyethylene, polypropylene, polystyrene and polyisobutyrene; vinyl polymers such as polyvinyl chloride, polyvinylidene chloride, and vinyl chloride-vinyl acetate copolymer; acrylate polymers such as polymethyl acrylate and polymethyl methacrylate; polyvinyl alcohol, chlorinated polyethylene; epoxy resins; butyral resins, rubber derivatives, and thermosetting resins such as prepolymers of phenol-formaldehyde. The binder is optionally employable so that the ratio of the dye to the binder can be in the range of 0.01/1 to 50/1, preferably 0.05/1 to 5/1 by weight. The coating liquid can be prepared in accordance with ultrasonic solution method.

The coating procedure can be performed by the known methods such as spray coat, spin coat, dip coat, roller coat, blade coat, doctor roller coat and screen print. In the present invention, the recording dye layer is preferably formed in accordance with spin coat method.

The recording dye layer of the invention is formed so that the difference between the inner part optical density and the outer part optical density may be less than 0.2 (preferably in the range of 0.05 to 0.15), and is easily prepared by spin coat method under normal coating conditions. The spin coat procedure is preferably carried out at a humidity of less than 50%RH (more preferably less than 40%RH, further preferably in the range of 30 to 10%RH). In the coating procedure, the exhausting rate of the spin-coater cup is preferably set at more than 0.2 cc/minute. The initial position for coating (from which the coating liquid is applied on the substrate) is preferably as close to the inner groove as possible, and concretely the coating liquid is preferably applied from the position of 1 mm exterior to the internal groove boundary.

The recording layer can be a single layer or can comprise plural layers. The thickness of the recording layer generally is in the range of 20 to 500 nm, preferably 50 to 300 nm. The recording layer can be provided on both of the surfaces of the substrate.

After forming the recording dye layer, heat treatment is preferably carried out so as to remove the solvent contained in the formed recording dye layer. The conditions of the heat treatment are not restricted, but generally the temperature is set at more than 30°C and preferably the treatment is carried out at a temperature of 60 to 90°C (more preferably 80°c) for 30 to 120 minutes (more preferably 60 minutes). In place of the heat treatment, the formed recording dye layer may be stored at a temperature of less than 30°C (preferably 15 to 28°c) for more than 2 hours, to remove the solvent. After the step of forming the light-reflecting layer, forming the protective layer or producing the resultant CD-R, as well as after the step of forming the recording dye layer, the heat treatment may be carried out and further it may be performed twice or more in combination.

On the recording layer, the light-reflecting layer is placed so as to enhance the light-reflection in the course of reproduction of information.

The light-reflecting material to be used for the formation of the light-reflecting layer should show a high reflection to the laser light. Examples of the light-reflecting materials include metals and sub-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi. Stainless steel film is also employable. Preferred light-reflecting materials are Cr, Ni, Pt, Cu, Ag, Au, Al and stainless steel film. These materials can be employed singly, in combination, or in the form of alloy. Au, Ag and their alloys are particularly preferred.

The light-reflecting layer can be formed on the recording layer by vacuum deposition, sputtering or ion-plating. The thickness of the light-reflecting layer generally is 10 to 800 nm, preferably 20 to 500 nm, further preferably 50 to 300 nm.

On the light-reflecting layer, a protective layer can be placed so as to protect the recording layer from chemical deterioration or physical shock. The protective layer can be also placed on the substrate on the face not having the recording layer so as to increase the scratch resistance and the moisture resistance of the medium.

The protective layer can be formed of inorganic materials such as SiO, $SiO_2$, $MgF_2$, $SnO_2$, $Si_3N_4$, or organic materials such as thermo-plastic resins, thermo-setting resins, and UV curable resins.

The protective layer can be formed on the light-reflecting layer and/or the substrate by laminating a film of plastic material using an adhesive. The inorganic material can be also placed on the light-reflecting layer and/or the substrate by vacuum deposition or sputtering. Otherwise, the organic polymer material can be coated in the form of a solution containing the polymer material and dried to give the protective layer. The UV curable resin is dissolved in a solvent and coated on the light-reflecting layer and/or the substrate, and cured by applying ultra-violet rays to the coated layer. The coating layer can contain various additives such as an anti-static agent, an oxidation inhibitor, and a ultraviolet absorber. The protective layer generally has a thickness of 0.1 to 100 μm.

The information recording medium of the invention may comprise one substrate having one or two recording layers or two substrates each of which has one recording layer and combined to give a known air sandwich structure.

The information recording medium comprising one substrate shows high light-reflection, and hence the reproduction of the recorded information can be accomplished by means of a commercially available CD player.

The information recording medium of the invention can be applied for a recordable digital video disc (DVD-R), on which information can be recorded in high density. The DVD-R according to the present invention can be prepared in the following manner.

On the transparent disk substrate (diameter: 120±3 mm) having pregroove of 0.8 μm track pitch (which is narrower than 1.6 μm track pitch of CD-R), the recording dye layer of the invention, the light-reflecting layer and usually the protective layer are overlaid in this order to form a disc. The thus formed disc and another disc (a protective disc substrate having the same shape or a disc independently formed by repeating the same procedure as described above) are laminated with adhesive so that the recording layer may be positioned inside.

If the recording medium of the invention is employed, the information recording can be carried out not only at a normal line rate (1.2 to 1.4 m/sec., in the case of CD format) but also at a fourfold line rate and a sixfold line rate. The recording procedure is preferred to be performed at a line rate of more than 4 m/sec. (more preferably 4.5 to 10 m/sec.).

The high speed recording/reproducing procedures are carried out with the recording medium of the invention in the following manner.

The information recording medium is made to rotate at a line rate of more than 4 m/sec. On the rotating medium, a recording light source such as a semiconductor laser beam is applied through the transparent substrate. By the application of the laser beam, pits are formed in the recording layer. The pit is assumed to be produced by local vacancy of the recording layer, deformation of the recording layer and/or the substrate, change of the physical or chemical characteristics of the recording layer. The light source preferably is a semiconductor laser having an oscillation frequency in the range of 500 to 850 nm. The preferred beam wavelength is in the range of 500 to 800 nm. In the case of the CR-R type recording medium, the laser beam preferably has a wavelength of 770 to 790 nm. In the case of the DVD-R type recording medium, the wavelength is preferably in the range of 630 to 680 nm.

The reproduction of the recorded information can be accomplished by applying a semiconductor laser beam on the

medium rotating at a line rate in the range of a normal rate to a thirty-fold rate. The light-reflection is then detected from the substrate side.

The present invention is further described by the following non-restrictive working examples.

Examples and Comparison Examples

[Example 1]

The cyanine dye (I-4) and the anti-fading agent (hereinafter referred to as "quencher") (A1-1) were dissolved in 2,2,3,3-tetrafluoropropanol to prepare a coating liquid for recording dye layer (weight ratio of dye/quencher was 1/10). Thus prepared coating liquid had the concentration of 2.5 wt.%, while the solubility of the cyanine dye (I-4) to 2,2,3,3-tetrafluoropropanol was 20 wt.% at 25°C.

The coating liquid was then coated by spin coat on the surface (on which pregroove was formed) of a polycarbonate substrate (diameter: 120 mm, inner diameter: 15 mm, thickness: 1.2 mm, Panlight AD5503 (trade name), available from Teijin Limited) to give a recording dye layer (average thickness at the pregroove: approx. 150 nm). The pregroove was beforehand formed spirally on the substrate (track pitch: 1.6 μm, pregroove width: 0.5 μm, depth: 0.18 μm) by injection molding of the substrate. The substrate thus provided with the recording dye layer was then subject to the heat treatment at 80°C for 1 hour.

On the coated dye layer, a light-reflecting layer made of gold (Au) was provided by sputtering. After that, a UV curable photopolymer (UV curable agent: SD-220, available from Dainippon Ink & Chemicals, Inc.) was coated by spin-coat on the light-reflecting layer, and then irradiated with ultra-violet rays to be cured to form a protective layer of 10 μm thick. Thus, an information recording medium of CD-R type (a sample disc) of the invention was prepared.

[Example 2]

The procedure of Example 1 was repeated except that the concentration of the coating liquid was set at 5.0 wt.%, to prepare an information recording medium of CD-R type of the invention.

[Comparison Example 1]

The procedure of Example 1 was repeated except that the following cyanine dye (a) was used, and that the difference between the inner part optical density and the outer part optical density was set at the value shown in Table 1. Thus, an information recording medium of CD-R type for comparison was prepared.

The inner part optical density was measured at the position of 1 mm exterior to the internal boundary of the pregroove area (the internal boundary was positioned at 25 mm exterior to the center of the disc substrate in the radial direction, and hence the inner part optical density was measured at the position of 26 mm exterior to the center in the radial direction). The outer part optical density was measured at the position of 40 mm exterior to the center in the radial direction (the position was 1/3 of the pregroove area width exterior to the internal boundary in radial direction). Hereinafter, the inner part optical density, the outer part optical density and the difference of them thus measured are represented by "$OD_{26}$", "$OD_{40}$" and "$\Delta OD = OD_{40} - OD_{26}$", respectively.

The solubility of the cyanine dye (a) to 2,2,3,3-tetrafluoropropanol was 8 wt.% at 25°C.

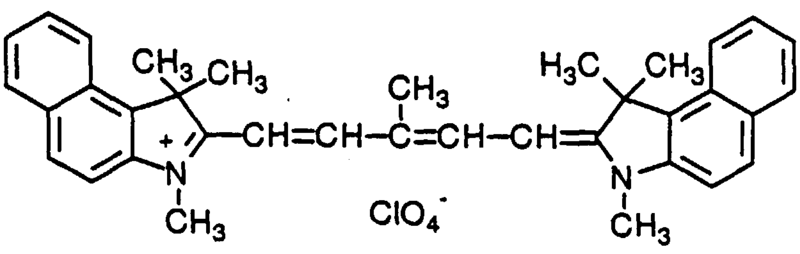

(a)

[Comparison Example 2]

The procedure of Example 2 was repeated except that the above cyanine dye (a) was used, and that the difference (ΔOD) between the inner part optical density ($OD_{26}$) and the outer part optical density ($OD_{40}$) was set at the value shown in Table 1. Thus, an information recording medium of CD-R type for comparison was prepared.

[Comparison Example 3]

The procedure of Example 1 was repeated except that the concentration of the coating liquid was set at 10 wt.%, and that the difference (ΔOD) between the inner part optical density ($OD_{26}$) and the outer part optical density ($OD_{40}$) was set at the value shown in Table 1. Thus, an information recording medium of CD-R type for comparison was prepared.

[Comparison Example 4]

The procedure of Example 1 was repeated except that the above cyanine dye (a) was used, to prepare an information recording medium of CD-R type for comparison.

[Evaluation of Optical Information Recording Medium]

(1) Measurement of optical density of recording dye layer

The inner part optical density ($OD_{26}$) and the outer part optical density ($OD_{40}$) were measured at the positions A and B in Fig.1, respectively. The measurement was carried out at the wavelength of 670 nm by means of Keyence-Sensor LX2-100 (trade name, available form Keyence-Sensor Co., Ltd.), to obtain the optical density difference ($\Delta OD = OD_{40} - OD_{26}$).

The results are shown in Table 1.

(2) Measurement of tracking error (TE)

Tracking error amplitude (TE amplitude) was measured at the position of 1 mm exterior to the inner border of the pregroove area (the position of 26 mm exterior to the center in the radial direction). Samples giving a TE amplitude of 0.4 to 0.6 V are indicated by "good", and the others are indicated by "poor" in Table 1.

(3) Evaluation of recording/reproducing characteristics

The sample was set in the recorder (OTM-2000x4 [trade name], available from Pulsetech) to rotate at 4.8 m/sec. (fourfold line rate), and EFM signals were recorded by means of a laser beam of wavelength 780 nm at the power of 13.0 mW. After that, the sample was made to rotate at 1.2 m/sec. and the signals recorded at the position of 1 mm exterior to the inner border of the pregroove area (the position of 26 mm exterior to the center in the radial direction) was reproduced to measure block error rate (ER).

The results are shown in Table 1.

Table 1

| | Recording dye layer | | Optical density | | Error | |
|---|---|---|---|---|---|---|
| | dye | coating liquid | $OD_{26}$ | ΔOD | TE | ER |
| Ex.1 | I-4 | 2.5 wt.% | 1.0 | 0.09 | good | 4 |
| Ex.2 | I-4 | 5.0 wt.% | 1.0 | 0.13 | good | 4 |
| C.Ex.1 | a | 2.5 wt.% | 0.85 | 0.22 | good | 7 |
| C.Ex.2 | a | 5.0 wt.% | 0.85 | 0.23 | good | 7 |
| C.Ex.3 | I-4 | 10.0 wt.% | 0.85 | 0.22 | good | 7 |
| C.Ex.4 | a | 2.5 wt.% | 1.0 | 0.10 | poor | 4 |

The results shown in Table 1 indicate the following facts.

The samples of Examples 1 and 2 of the invention (in each of which the recording dye layer comprises a dye of high solubility) give both good TE amplitude and low ER values. Therefore, the CD-R of the invention has both good tracking characteristics and excellent recording/reproducing ones.

The samples of Comparison Examples 1 and 2 (in each of which the recording dye layer comprises a dye of low solubility, and the optical density difference ($\Delta OD = OD_{40} - OD_{26}$) is out of the range of the invention) and the sample of Comparison Example 3 (in which the recording dye layer comprises a dye of high solubility, but the optical density difference ($\Delta OD = OD_{40} - OD_{26}$) is out of the range of the invention) give high ER values. This fact means that those samples have poor recording/reproducing characteristics. The samples of Comparison Example 4 (in which the recording dye layer comprises a dye of low solubility) give poor TE amplitude, which means that the sample has poor tracking characteristics.

[Examples 3-4] and [Comparison Examples 5-8]

Each of the procedures of Examples 1-2 and Comparison Examples 1-4 was repeated except that the light-reflecting layer was made of silver (Ag) in place of gold (Au), to prepare a sample. The prepared samples were evaluated in the same manner as described above.

The results are shown in Table 2.

Table 2

| | Recording dye layer | | Optical density | | Error | |
|---|---|---|---|---|---|---|
| | dye | coating liquid | $OD_{26}$ | ΔOD | TE | ER |
| Ex.3 | I-4 | 2.5 wt.% | 1.0 | 0.09 | good | 5 |
| Ex.4 | I-4 | 5.0 wt.% | 1.0 | 0.14 | good | 5 |
| C.Ex.5 | a | 2.5 wt.% | 0.86 | 0.22 | good | 8 |
| C.Ex.6 | a | 5.0 wt.% | 0.85 | 0.23 | good | 8 |
| C.Ex.7 | I-4 | 10.0 wt.% | 0.85 | 0.23 | good | 8 |
| C.Ex.8 | a | 2.5 wt.% | 1.0 | 0.10 | poor | 5 |

The results shown in Table 2 indicate the following fact.

The samples of Examples 3 and 4 of the invention (in each of which the recording dye layer comprises a dye of high solubility) give both good TE amplitude and low ER values even if the light-reflecting layer is made of silver (Ag) in place of gold (Au). Therefore, the CD-R of the invention has both good tracking characteristics and excellent recording/reproducing ones.

## Claims

1. An optical information recording medium comprising a transparent disc substrate having a pregroove area on its surface, a recording dye layer on which information can be recorded by irradiation with light, and a light-reflecting layer overlaid in order, wherein the recording dye layer comprises a cyanine dye whose solubility in 2,2,3,3-tetrafluoropropanol is more than 13 wt.% at 25°C, and has a difference of optical density of less than 0.2, said difference being between an optical density measured in a position of 1 mm from an internal boundary of the pregroove area and an optical density measured in a position of one thirds of the width of the pregroove area from the internal boundary of the pregroove area.

2. The optical information recording medium of claim 1, wherein the light-reflecting layer comprises Au.

3. The optical information recording medium of claim 1, wherein the light-reflecting layer comprises Ag.

4. The optical information recording medium of claim 1, wherein the cyanine dye is represented by the following formula (I):

$$[DYE^{+}]_{n}X^{n-} \qquad (I)$$

in which $DYE^{+}$ represents a monovalent cyanine dye cation, n represents an integer of 2 or more, and $X^{n-}$ represents an n-valent anion.

5. The optical information recording medium of claim 4, wherein the cyanine dye is represented by the following formula (II):

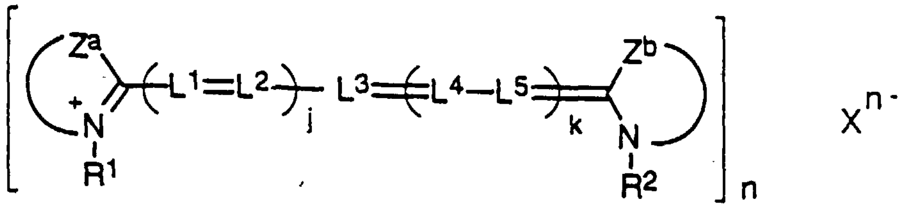

(II)

in which each of Za and Zb independently represents an atomic group required for forming a 5- or 6-membered nitrogen atom-containing heterocyclic ring; each of $R^1$ and $R^2$ independently represents an alkyl group or an aryl group; each of $L^1$, $L^2$, $L^3$, $L^4$ and $L^5$ independently represents a methine group or a methine group having a substituent group, and in the case that at least one $L^1$ trough $L^5$ has a substituent group, they may be combined via the substituent group to form a ring; j is 0, 1 or 2; k is 0 or 1; $X^{n-}$ represents an n-valent anion; and n is an integer of 2 or more.

6. The optical information recording medium of claim 4, wherein the cyanine dye is represented by the following formula (IIA):

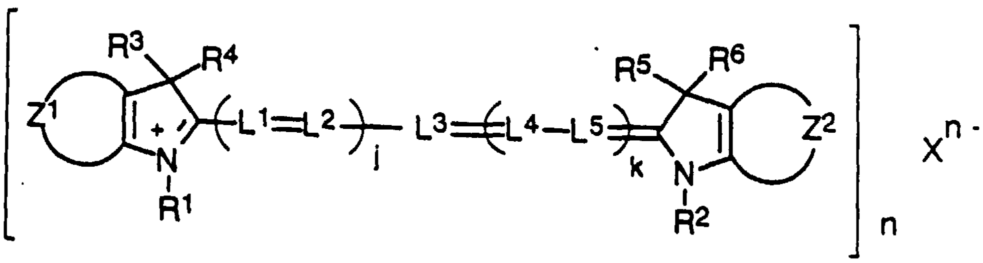

(IIA)

in which each of $Z^1$ and $Z^2$ independently represents an atomic group required for forming an indolenine nucleus or a benzoindolenine nucleus; each of $R^1$ and $R^2$ independently represents an alkyl group or an aryl group; each of $R^3$, $R^4$, $R^5$ and $R^6$ independently represents an alkyl group; each of $L^1$, $L^2$, $L^3$, $L^4$ and $L^5$ independently represents a methine group or methine group having a substituent group, and in the case that at least one of $L^1$ through $L^5$ has a substituent group, they may be combined via the substituent group to form a ring; j is 0, 1 or 2; k is an integer of 0 or 1; $X^{n-}$ represents an n-valent anion; and n is an integer of 2 or more.

7. The optical information recording medium of claim 1, wherein the recording dye layer further contains an anti-fading agent of the following formula (A1) or (A2):

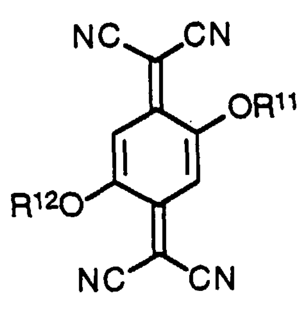

A1

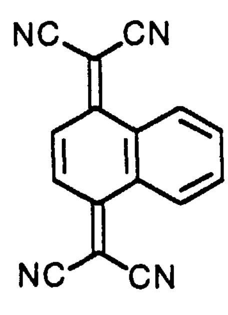

A2

in which each of $R^{11}$ and $R^{12}$ independently represents a hydrocarbon group.

**8.** The optical information recording medium of claim 4, wherein and $X^{n-}$ of the cyanine dye is an anion having a valence in the range of 1 to 4.

**9.** The optical information recording medium of claim 4, wherein and $X^{n-}$ of the cyanine dye is a 2-valent anion.

**10.** The optical information recording medium of claim 5, wherein each of $R^1$ and $R^2$ of the formula (II) independently is a straight chain alkyl group of 1 to 8 carbon atoms having no substituent groups or a straight chain alkyl group of 1 to 8 carbon atoms which has a substituent group selected from the group consisting of a alkoxy group of 1 to 6 carbon atoms and an alkylthio group of 1 to 6 carbon atoms.

**11.** The optical information recording medium of claim 5, wherein one of $L^1$ to $L^5$ of the formula (II) is combined to another of $L^1$ to $L^5$ to form a 5- or 6-membered ring.

**12.** The optical information recording medium of claim 1, wherein the pregroove has a depth in the range of 100 to 3,000 angstroms and a half-width in the range of 0.2 to 0.9 μm.

**13.** The optical information recording medium of claim 5, wherein one of $L^1$ to $L^5$ of the formula (II) is combined to another of $L^1$ to $L^5$ to form a cyclohexene ring.

**14.** The optical information recording medium of claim 4, wherein and $X^{n-}$ of the cyanine dye is an aromatic disulfonate ion or an aromatic trisulfonate ion.

**15.** The optical information recording medium of claim 6, wherein the alkyl group represented by each of $R^3$, $R^4$, $R^5$ and $R^6$ of the formula (IIA) is a straight chain alkyl group having 1-6 carbon atoms.

FIGURE